# EUROPEAN PATENT SPECIFICATION

(11) **EP 4 496 389 B1**
(45) Date of publication and mention of the grant of the patent: **11.02.2026**
(21) Application number: 24188054.1
(22) Date of filing: 11.07.2024
(51) Int. Cl.: H04W 52/02, G06F 1/3203, G06F 1/3209, H04L 41/0833, G06F 1/3234

(54) **APPARATUS FOR A NETWORK DEVICE**
VORRICHTUNG FÜR EINE NETZWERKVORRICHTUNG
APPAREIL POUR UN DISPOSITIF DE RÉSEAU

(30) Priority: 20.07.2023 FI 20235832
(43) Date of publication of application: 22.01.2025
(73) Proprietor: Nokia Solutions and Networks Oy, 02610 Espoo (FI)
(72) Inventor: HANNÁK, Gábor, Budapest (HU); GAJIC, Borislava, Unterhaching (DE)
(74) Representative: Novagraaf Technologies

(56) References cited:
- EP-A1- 4 432 740
- WO-A1-2023/098553
- CN-A- 112 804 739
- US-A1- 2022 407 664

## Description

### Field of the Disclosure

Various example embodiments relate to an apparatus for a network device.

Further embodiments relate to a method of operating related to an apparatus for a network device.

### Background

Wireless communication systems may be used for wireless exchange of information between two or more entities, e.g., comprising one or more terminal device, e.g., user equipment (UE), and one or more network devices such as, e.g., base stations.

In some conventional wireless communication systems, electrical energy consumption is responsible for a major part of operational expenditure (OPEX) of a mobile network operator. In some conventional systems, a main portion of electrical energy is consumed by a radio access network (RAN). In some conventional systems, radio units (RU) processing radio frequency signals consume the largest proportion of electrical energy, of, for example approximately 80%.

As an example, in some conventional radio units, some components of the RU, e.g., power amplifiers, may have high energy consumption even if they are not under high load, i.e., even if there are no user equipment served by an associated transmission chain at specific times. Therefore, energy saving (ES) and energy efficiency (EE) features can be useful to reduce OPEX in mobile network operation.

WO2023/098553A1 relates to methods and devices for controlling energy saving functions in radio frequency (RF) modules of base station equipment (e.g. RRU, RU, AAU) to reduce energy consumption while maintaining hardware reliability.

CN112804739A discloses a system in which a base station autonomously or semi-autonomously enters energy saving states (e.g., idle or reduced activity) based on network load, communication activity, or scheduling opportunities.

### Summary

Various embodiments of the disclosure are set out by the independent claims. The exemplary embodiments and features, if any, described in this specification, that do not fall under the scope of the independent claims, are to be interpreted as examples useful for understanding various exemplary embodiments of the disclosure.

Some embodiments relate to an apparatus according to claim 1.

In some embodiments, the apparatus or its functionality, respectively, may be provided within the network device, for example network node.

In some embodiments, the network device is a base station (BS), e.g., an Evolved NodeB (eNB) or a next-generation NodeB (gNB), e.g., according to some accepted standard.

In some embodiments, the network device is an Open Radio Access Network, O-RAN, Distributed Unit, O-DU.

In some embodiments, the further device may e.g. be a management device, e.g. for managing at least some aspects of operation of, for example, the network device, such as, e.g., operational aspects related to the at least one energy saving function.

In some embodiments, instructions, when executed by the at least one processor, cause the network device to use the at least one energy saving function based on the second information. In some embodiments, this e.g. facilitates management of the network device by the management device, e.g. regarding application, e.g. activation, and/or a general use of energy saving functions by the network device.

The first information characterizes one or more identifiers, each of the one or more identifiers being associated with a specific energy saving function.

In some embodiments, the one or more identifiers may be unique identifier(s). In other words, a specific one of the identifiers enables to uniquely identify a respective energy saving function.

The second information characterizes at least one identifier of the one or more identifiers. In other words, in some embodiments, the guidance provided to the network device by the at least one further device, e.g. management device, may comprise one or more of the, for example unique, identifiers.

The second information characterizes timing information indicating at least one of a) a point in time and/or b) a time period (e.g., time window being characterized by a start time and a stop time) for activation of the at least one energy saving function. Thus, in some embodiments, the second information may characterize at least one identifier of the one or more identifiers for identifying the energy saving function(s), and, additionally, the second information may comprise the timing information, e.g. with respect to at least one energy saving function. In some embodiments, this enables to instruct the network device at which time and/or for which time (period) to use or not to use at least one specific energy saving function.

In some embodiments, the timing information may be provided for more than one energy saving function.

In some embodiments, the second information characterizes an enablement status indicating whether the at least one energy saving function should be enabled or disabled. Thus, in some embodiments, using the second information, the network device may be instructed to, for example, disable a specific energy saving function, e.g. at a specific time or for a specific duration (as e.g. specified by the timing information).

In some embodiments, instructions, when executed by the at least one processor, cause the network device to determine the first information. As an example, in some embodiments, determining the first information may e.g. comprise evaluating a configuration of the network device.

In some embodiments, evaluating the configuration of the network device may comprise an evaluation of capabilities of the network device.

In some embodiments, e.g. when using an O-RAN DU as a network device, as an example, determining the first information may e.g. comprise negotiating with a further device, such as, e.g., an O-RAN radio unit, O-RU, associated with the O-DU.

Some embodiments relate to a network device comprising the apparatus according to the embodiments. As already mentioned above, in some embodiments, the network device may e.g. be a gNB or an O-DU.

Some embodiments relate to a method according to claim 5.

Some embodiments relate to an apparatus for a management device, according to claim 6.

In some embodiments, e.g. after receiving the first information, the management device may store a set of identifiers corresponding with, e.g. as characterized by, the received first information. In some embodiments, this e.g. enables the management device to maintain information on the at least one energy saving function supported by the network device.

In some embodiments, the management device may e.g. receive respective first information from a plurality of different network devices, and may e.g. store a respective set of identifiers corresponding with, e.g. as characterized by, the received first information, which enables the management device to efficiently control various different network devices regarding their activation or deactivation of energy saving functions, e.g. independent of a specific type or vendor of the different network devices. In other words, in some embodiments, the principle according to the embodiments enables control and/or guidance of energy saving functions of one or more network devices, e.g. in a generic way, e.g. based on the first information or the respective identifiers.

In some embodiments, the second information characterizes an enablement status indicating whether the at least one energy saving function should be enabled or disabled.

In some embodiments, instructions, when executed by the at least one processor, cause the management device to determine the second information based at least on the first information using a machine learning (ML) model. In some embodiments, as an example, this enables to dynamically adapt guidance as e.g. characterized by the second information for a use of energy saving functions by one or more network devices associated with the management device.

In some embodiments, the ML model may include at least one of: a) a neural network, for example deep neural network, b) other statistical methods such as b1) classifiers and/or b2) clustering methods and/or b3) pattern detection and mining methods, b4) estimation and detection methods, etc.

In some embodiments, instructions, when executed by the at least one processor, cause the management device to perform at least one of: a) collecting first data associated with at least the network device related to at least one of: a1) an energy efficiency performance, a2) a radio performance, a3) a performance prediction, b) providing input to the machine learning model based on at least one of b1) the first information and/or b2) the first data, c) obtaining output from the machine learning model, e.g. in the form of the second information, d) determining the second information based on the output from the machine learning model, e) adapting at least one of A) the machine learning model and/or B) the second information INF-2 based on at least one of e1) the first data and/or e2) the input to the machine learning model and/or e3) the output from the machine learning model, f) repeating at least one of the elements of collecting and/or providing and/or obtaining and/or determining and/or adapting.

In some embodiments, the first data associated with at least the network device related to energy efficiency performance may include, but is not limited to, at least one of the following elements: a) energy consumption related data (e.g., transmit (Tx) and/or receive (Rx) power values, hardware (HW) temperature, network functions (NF) energy consumption values), b) energy efficiency related data (e.g., energy consumption over data volume), c) and energy saving function-related, e.g. sleep mode (SM)-related, activation data (e.g., identifiers of active energy saving functions, for example sleep modes and/or power states, and/or information on changes related to energy saving functions, such as a timestamp of the change and an identifier of a new energy saving function), d) data obtained by measurement(s) according to 3GPP TS28.552, e.g., power, energy and environmental measurements, e) one or more key performance indicators (KPI) related to energy efficiency and/or energy consumption as defined by 3GPP TS28.554, Clause 6.7.

In some embodiments, the first data associated with at least the network device related to radio performance may include, but is not limited to, at least one of the following elements: a) cell-related data (e.g., cell ID, used carriers, radio unit and antenna array configuration, employed beam pattern configuration in case of (massive) MIMO, cell-carrier mapping, carrier-HW mapping), b) load-related data (e.g., PRB utilization, cell load statistics, DL/UL throughput values, GBR and non-GBR and PDCCH load values), c) UE performance related data.

In some embodiments, the first data associated with at least the network device related to performance prediction may include, but is not limited to, at least one of the following elements: a) load prediction data, b) UE mobility prediction data, c) QoS prediction data, d) energy consumption prediction data. In some embodiments, the data related to performance prediction may be obtained from other devices or entities.

In some embodiments, different aspects or parts of the first data may be linked to, e.g., associated with, a respective energy saving function currently used by the network device (e.g., O-DU) and/or a device associated with the network device (e.g., O-RU). In some embodiments, respective time stamps may be used for such association.

Some embodiments relate to a management device comprising the apparatus according to the embodiments.

Some embodiments relate to a method according to claim 9.

Further embodiments relate to a communication system comprising at least one apparatus according to the embodiments.

Further embodiments relate to a computer program comprising instructions which, when the program is executed by a computer, cause the computer to carry out the method according to the embodiments.

### Brief Description of the Figures

- Fig. 1A: schematically depicts a simplified block diagram according to some embodiments,
- Fig. 1B: schematically depicts a simplified block diagram according to some embodiments,
- Fig. 2: schematically depicts a simplified block diagram according to some embodiments,
- Fig. 3: schematically depicts a simplified flow chart according to some embodiments,
- Fig. 4: schematically depicts a simplified block diagram according to some embodiments,
- Fig. 5: schematically depicts a simplified block diagram according to some embodiments,
- Fig. 6: schematically depicts a simplified flow chart according to some embodiments,
- Fig. 7: schematically depicts a simplified block diagram according to some embodiments,
- Fig. 8A: schematically depicts a simplified block diagram according to some embodiments,
- Fig. 8B: schematically depicts a simplified block diagram according to some embodiments,
- Fig. 9: schematically depicts a simplified flow chart according to some embodiments,
- Fig. 10: schematically depicts a simplified flow chart according to some embodiments,
- Fig. 11: schematically depicts a simplified flow chart according to some embodiments,
- Fig. 12: schematically depicts a simplified block diagram according to some embodiments,
- Fig. 13: schematically depicts a simplified block diagram according to some embodiments,
- Fig. 14: schematically depicts a simplified block diagram according to some embodiments,
- Fig. 15: schematically depicts a simplified signaling diagram according to some embodiments.

### Description of some Exemplary Embodiments

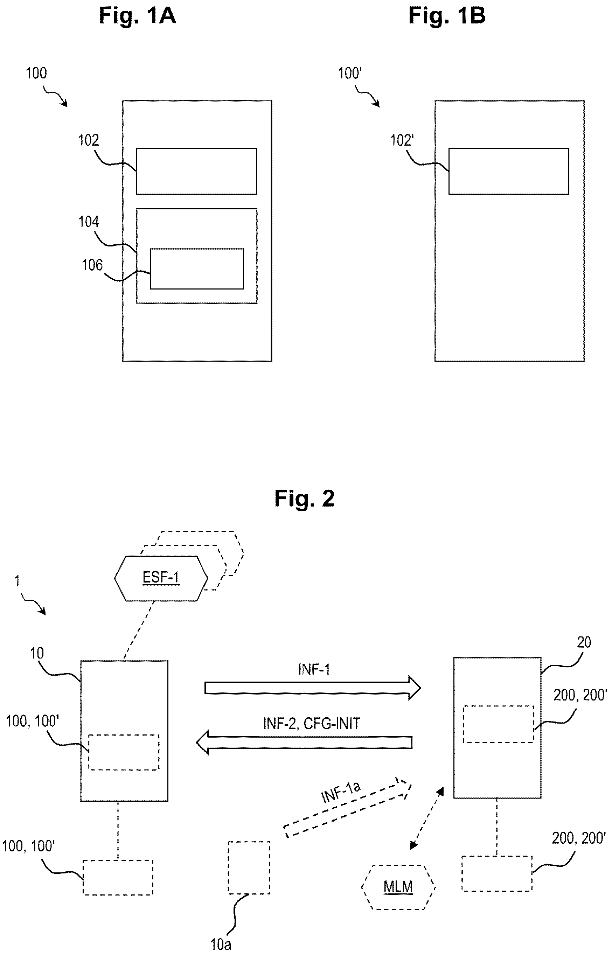

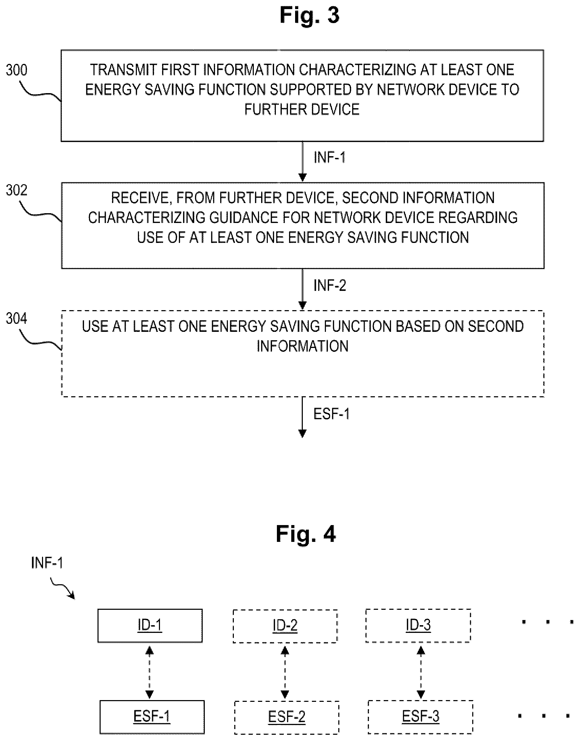

Some embodiments, see, for example, Fig. 1A, 2, 3, relate to an apparatus 100 for a network device 10, the apparatus 100 comprising at least one processor 102 (Fig. 1A), and at least one memory 104 storing instructions 106 that, when executed by the at least one processor 102, cause the network device 10 (Fig. 2) to transmit 300 (Fig. 3) first information INF-1 characterizing at least one energy saving function ESF-1 supported by the network device 10 to a further device 20 and to receive 302, from the further device 20, second information INF-2 characterizing guidance for the network device 10 regarding a use of the at least one energy saving function ESF-1. As an example, in some embodiments, the exchange of the first and second information INF-1, INF-2 enables to provide guidance to the network device 19, e.g., for instructing the network device 10 when to use a specific energy saving function.

In some embodiments, Fig. 2, the apparatus 100 or its functionality, respectively, may be provided within the network device 10, for example a network node, see the dashed rectangle 100 of Fig. 2 arranged within the network device 10.

In some embodiments, the apparatus 100 may be provided for the network device 10, but the apparatus 100 is not necessarily integrated into the network device 10, which is indicated by a further dashed rectangle 100 of Fig. 2 arranged outside the network device 10.

In some embodiments, Fig. 2, the network device 10 is a base station, e.g., an Evolved NodeB (eNB) or a next-generation NodeB (gNB), e.g., according to some accepted standard, such as a 4G or 5G standard or some other standard.

In some embodiments, Fig. 2, the network device 10 is an Open Radio Access Network, O-RAN, Distributed Unit, O-DU.

In some embodiments, Fig. 2, the further device 20 may e.g. be a management device, e.g. for managing at least some aspects of operation of, for example, the network device 10, such as, e.g., operational aspects related to the at least one energy saving function ESF-1.

In some embodiments, Fig. 2, at least one of the network device 10 and/or the further device 20 may be provided for, e.g. form part of, a wireless communication system 1.

In some embodiments, Fig. 2, the at least one energy saving function ESF-1 may comprise and/or may be associated with at least one of the following aspects: a) a specific operational mode with reduced energy consumption, as e.g. compared to a regular operation, e.g., a sleep mode, b) a temporary deactivation of one or more components, e.g. of the network device 10 and/or an associated device, c) an advance sleep mode (ASM), e.g., according to some accepted standard, e.g. 5G, d) network energy saving (NES), e.g., according to some accepted standard.

In some embodiments, Fig. 2, the at least one energy saving function ESF-1 may comprise and/or may be associated with at least one of the following aspects: a) implementation-specific energy saving feature, b) vendor-specific energy saving feature, c) product-specific energy saving feature.

In some embodiments, Fig. 2, the at least one energy saving function ESF-1 may enable to reduce an energy consumption (e.g., electric energy consumption), e.g., of the network device 10 and/or of a device associated with the network device 10, while maintaining a certain level of functionality of the network device 10 and/or of the device associated with the network device 10.

In some embodiments, Fig. 2, the at least one energy saving function ESF-1 provides for at least temporarily turning off pieces of energy consuming hardware, e.g., for certain durations, such as, e.g., for an OFDM symbol or for a subframe or for frame durations, or for putting energy consuming hardware into a standby mode or a sleep mode.

In some embodiments, alternatively or additionally to using energy saving features such as, e.g., sleep mode features, which work in a time domain (e.g., adaptation of periodicity, configuration, and content of SSB, SIB1, RACH, Paging), energy saving features may also support a frequency domain (e.g., switch off/on carriers, bands, bandwidth parts) and/or a spatial domain (e.g., switch off/on transceiver chains, active antenna panels) and/or a power domain (e.g., adapting transmit power, signal pre- and post-distortion).

In some embodiments, Fig. 2, the network device 10 may, e.g., at least temporarily support a plurality of energy saving functions, which is symbolized by Fig. 2 indicating several dashed hexagons associated with the at least one energy saving function ESF-1.

In some embodiments, Fig. 3, the instructions 106, when executed by the at least one processor 102, cause the network device 10 to use 304 the at least one energy saving function ESF-1 based on the second information INF-2. In some embodiments, this e.g. facilitates management of the network device 10 by the management device 20, e.g. regarding application, e.g. activation and/or deactivation, and/or a general use of one or more energy saving functions by the network device 10 and/or associated devices (not shown).

In some embodiments, Fig. 4, the first information INF-1 characterizes one or more identifiers ID-1, ID-2, ID-3, ..., each of the one or more identifiers ID-1, ID-2, ID-3, ..., being associated with a specific energy saving function as e.g. supported by the network device 10 (Fig. 2). In some embodiments, this enables the network device 10 to generically describe its capability of energy saving related to the respective energy saving function, e.g. ESF-1.

In some embodiments, Fig. 4, the one or more identifiers ID-1, ID-2, ID-3, ..., may be unique identifier(s). In other words, a specific one of the identifiers ID-1, ID-2, ID-3, ..., enables to uniquely identify a respective energy saving function ESF-1, ESF-2, ESF-3, ....

As an example, by providing the identifier "ID-3" within the first information INF-1, the network device 10 may e.g. signal to the further device 20 that the network device 10 supports the energy saving function ESF-3, and so on.

In some embodiments, Fig. 2, 3, 4, the second information INF-2 characterizes at least one identifier ID-1 of the one or more identifiers ID-1, ID-2, ID-3, .... In other words, in some embodiments, the guidance provided to the network device 10 by the at least one further device, e.g. management device, 20 may comprise one or more of the, for example unique, identifiers.

As an example, by providing the identifier "ID-3" within the second information INF-2, the management device 20 may e.g. signal to the network device 10 that the network device 10 may use or, for example, should use, the associated energy saving function ESF-3, and so on.

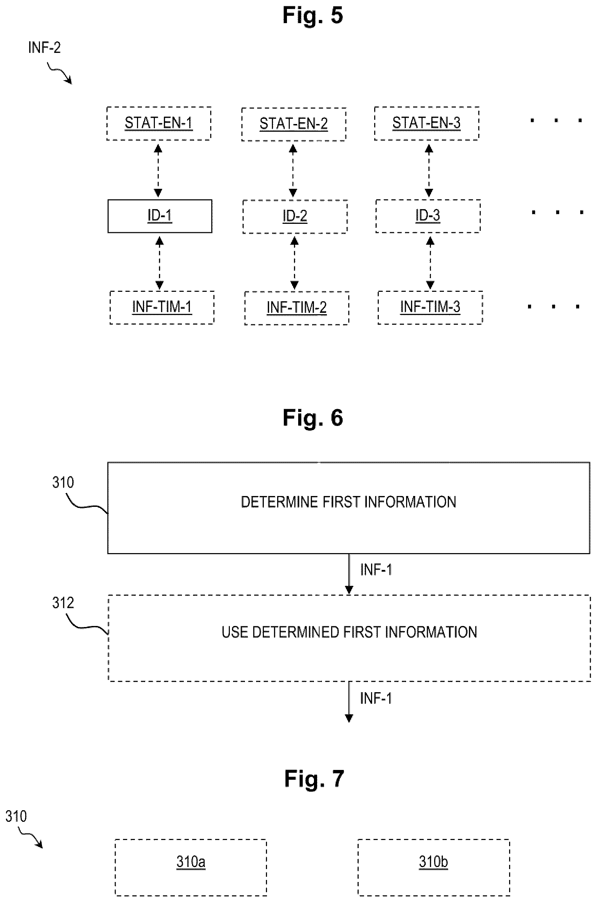

In some embodiments, Fig. 5, the second information INF-2 characterizes timing information INF-TIM-1, INF-TIM-2, INF-TIM-3, ... indicating at least one of a) a point in time and/or b) a time period (e.g., time window being characterized by a start time and a stop time) for activation of the at least one energy saving function ESF-1, ESF-2, ESF-3, .... Thus, in some embodiments, the second information INF-2 may characterize at least one identifier ID-3 of the one or more identifiers ID-1, ID-2, ID-3, ..., e.g., for identifying the respective energy saving function(s), and, additionally, the second information INF-2 may comprise the timing information INF-TIM-3, e.g. with respect to at least one energy saving function. In some embodiments, this enables the management device 20 to instruct the network device 10 at which time and/or for which time (period) to use or not to use at least one specific energy saving function ESF-3.

In some embodiments, the timing information may be provided for more than one energy saving function, e.g., for some or all energy saving functions as e.g. characterized by the first information INF-1.

In some embodiments, Fig. 5, the second information INF-2 characterizes an enablement status STAT-EN-1, STAT-EN-2, STAT-EN-3, ... indicating whether the at least one energy saving function ESF-1, ESF-2, ESF-3, ... should be enabled or disabled. Thus, in some embodiments, using the second information INF-2, the network device 10 may be instructed to, for example, disable a specific energy saving function ESF-2, e.g. at a specific time or for a specific duration (as e.g. specified by the timing information INF-TIM-2), e.g. using the enablement status STAT-EN-2.

In some embodiments, a respective enablement status may be provided for one or more, for example all, energy saving functions as e.g. indicated by the first information.

In some embodiments, Fig. 6, the instructions 106, when executed by the at least one processor 102, cause the network device 10 (Fig. 2) to determine 310 the first information INF-1. As an example, in some embodiments, see Fig. 7, determining 310 the first information INF-1 may e.g. comprise evaluating 310a a configuration of the network device 10. In some embodiments, e.g., when using an O-RAN DU as a network device, as an example, determining 310 the first information INF-1 may e.g. comprise negotiating 310b with a further device, such as, e.g., an O-RAN radio unit, O-RU, associated with the O-DU. The optional block 312 of Fig. 6 symbolizes using 312 the so determined first information INF-1, e.g. by performing the transmitting 300 as explained above with exemplary reference to Fig. 3.

In some embodiments, Fig. 7, evaluating 310a the configuration of the network device 10 may comprise an evaluation of capabilities of the network device 10. As an example, in some embodiments, the network device, e.g., O-DU, may expose only a set of energy saving functions (as may, e.g., be characterized by the first information INF-1), for which set the O-DU can provide a suitable scheduling.

Some embodiments, Fig. 1B, relate to an apparatus 100' for a network device 10 (Fig. 2), the apparatus 100' comprising means 102' for causing the network device 10 to transmit 300 first information INF-1 characterizing at least one energy saving function ESF-1, ... supported by the network device 10 to a further device 20 and to receive 302, from the further device 20, second information INF-2 characterizing guidance for the network device 10 regarding a use of the at least one energy saving function. In some embodiments, the means 102' for causing the network device 10 to perform the aforementioned transmit and receive operations may e.g. comprise at least one processor 102 (Fig. 1A), and at least one memory 104 storing instructions 106 that, when executed by the at least one processor 102, cause the network device 10 to perform the aforementioned transmit and receive operations.

In some embodiments, Fig. 2, similar to the apparatus 100 of Fig. 1A, the apparatus 100' of Fig. 1B or its functionality, respectively, may be provided within the network device 10 (Fig. 2), see the dashed rectangle 100' of Fig. 2 arranged within the network device 10. In some embodiments, however, the apparatus 100' may be provided for the network device 10, but the apparatus 100' is not necessarily integrated into the network device 10, which is indicated by a further dashed rectangle 100' of Fig. 2 arranged outside the network device 10.

Some embodiments, Fig. 2, relate to a network device 10 comprising the apparatus 100, 100' according to the embodiments. As already mentioned above, in some embodiments, the network device 10 may e.g. be a gNB or an O-DU.

Some embodiments, Fig. 3, relate to a method, comprising: transmitting 300, by a network device 10, first information INF-1 characterizing at least one energy saving function ESF-1, ... supported by the network device 10 to a further device 20, receiving 302, by the network device 10, from the further device 20, second information INF-2 characterizing guidance for the network device 10 regarding a use of the at least one energy saving function ESF-1, ....

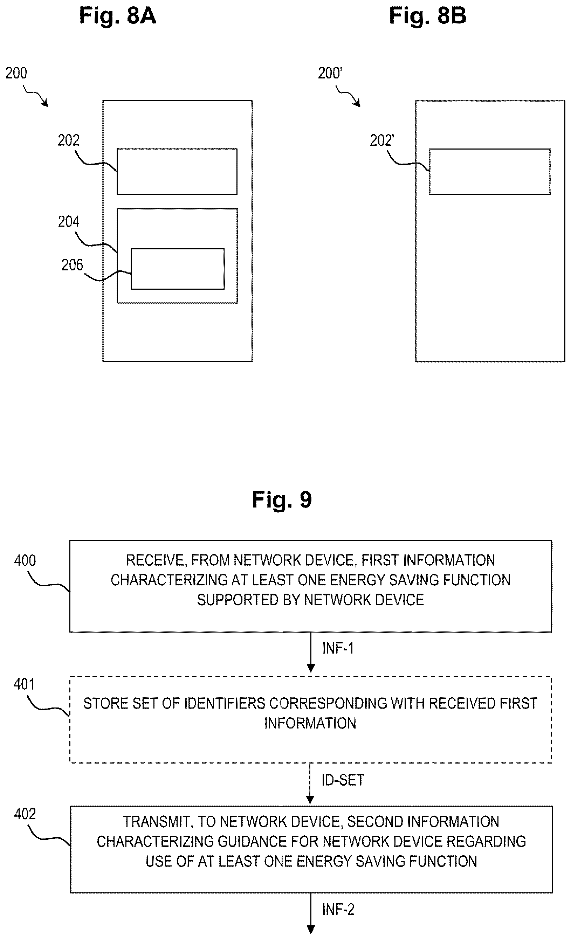

Some embodiments, Fig. 8A, relate to an apparatus 200 for a management device 20 (Fig. 2), e.g. for a management device 20 for a network device 10, e.g. a network device 10 according to the embodiments, the apparatus 200 (Fig. 8A) comprising at least one processor 202, and at least one memory 204 storing instructions 206 that, when executed by the at least one processor 202, cause the management device 20 to receive 400 (Fig. 9), from a network device 10, first information INF-1 characterizing at least one energy saving function ESF-1, ... supported by the network device 10 and to transmit 402 to the network device 10 second information INF-2 characterizing guidance for the network device 10 regarding a use of the at least one energy saving function ESF-1, ....

In some embodiments, as already mentioned above with exemplary reference to Fig. 4, the first information INF-1 characterizes one or more identifiers ID-1, ID-2, ID-3, ..., each of the one or more identifiers being associated with a specific energy saving function ESF-1, ESF-2, ESF-3, ..., and the second information INF-2 characterizes, as also already mentioned above, at least one identifier ID-1, ID-2, ID-3, ..., of the one or more identifiers.

In some embodiments, Fig. 9, e.g., after receiving 400 the first information INF-1, the management device 20 may store 401 a set ID-SET of identifiers corresponding with, e.g. as characterized by, the received first information INF-1. In some embodiments, this e.g. enables the management device 20 to maintain information on the at least one energy saving function ESF-1, ... supported by the network device 10.

In some embodiments, Fig. 2, the management device 20 may e.g. receive respective first information INF-1, INF-1a from a plurality of different network devices 10, 10a, and may e.g. store a respective set of identifiers corresponding with, e.g. as characterized by, the received first information INF-1, INF-1a, which enables the management device 20 to efficiently control various different network devices 10, 10a regarding their activation or deactivation of energy saving functions, e.g. independent of a specific type or vendor or operator of the different network devices. In other words, in some embodiments, the principle according to the embodiments enables control and/or guidance of energy saving functions of one or more network devices 10, 10a, e.g. in a generic way, e.g. based on the first information or the respective identifiers.

In some embodiments, as already mentioned above with exemplary reference to Fig. 5, the second information INF-2 characterizes timing information indicating at least one of a) a point in time and/or b) a time period for activation of the at least one energy saving function.

In some embodiments, as also already mentioned above with exemplary reference to Fig. 5, the second information characterizes an enablement status indicating whether the at least one energy saving function should be enabled or disabled.

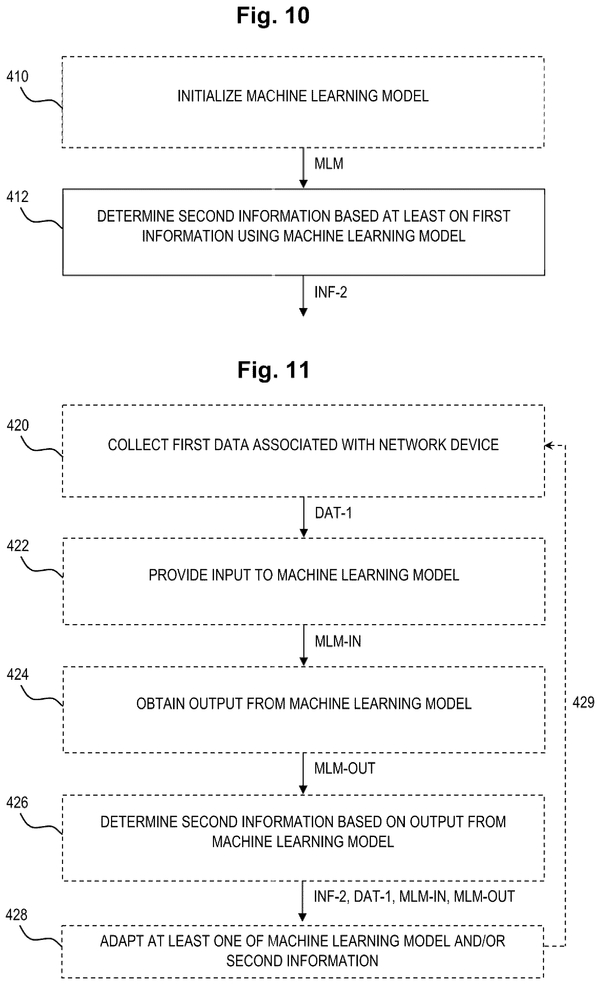

In some embodiments, Fig. 10, the instructions 206, when executed by the at least one processor 202, cause the management device 20 (Fig. 2) to determine 412 the second information INF-2 based at least on the first information INF-1 using a machine learning (ML) model MLM. In some embodiments, as an example, this enables to dynamically adapt guidance as e.g. characterized by the second information INF-2 for a use of energy saving functions ESF-1, ... by one or more network devices 10, 10a associated with the management device 20.

In some embodiments, Fig. 2, the ML model MLM may include at least one of: a) a neural network, for example deep neural network, b) other statistical methods such as b1) classifiers and/or b2) clustering methods and/or b3) pattern detection and mining methods, b4) estimation and detection methods, etc.

In some embodiments, Fig. 10, the instructions 206, when executed by the at least one processor 202, cause the management device 20 (Fig. 2) to initialize 410 the machine learning model MLM, e.g., to determine, e.g., learn, a, for example best, guidance regarding a use, for example an enablement, of the at least one energy saving function ESF-1, ....

In some embodiments, Fig. 11, the instructions 206, when executed by the at least one processor 202, cause the management device 20 to perform at least one of: a) collecting 420 first data DAT-1 associated with at least the network device 10 (or, in some embodiments, associated with a plurality of network devices 10, 10a) related to at least one of: a1) an energy efficiency performance, a2) a radio performance, a3) a performance prediction, b) providing 422 input MLM-IN to the machine learning model MLM based on at least one of b1) the first information INF-1 and/or b2) the first data DAT-1, c) obtaining 424 output MLM-OUT from the machine learning model MLM, e.g. in the form of the second information INF-2, d) determining 426 the second information INF-2 based on the output MLM-OUT from the machine learning model MLM, e) adapting 428 at least one of A) the machine learning model MLM and/or B) the second information INF-2 based on at least one of e1) the first data DAT-1 and/or e2) the input MLM-IN to the machine learning model MLM and/or e3) the output MLM-OUT from the machine learning model MLM, f) repeating 429 at least one of the elements of collecting 420 and/or providing 422 and/or obtaining 424 and/or determining 426 and/or adapting 428.

In some embodiments, it is also possible to provide another sequence and/or combination of at least two elements 420, 422, 424, 426, 428, 429 as exemplarily depicted by Fig. 11.

In some embodiments, the output MLM-OUT from the machine learning model MLM may be processed, e.g., by the management device 20, to derive the second information INF-2 therefrom, see, for example, block 426. In some embodiments, the output MLM-OUT from the machine learning model MLM may be used as the second information INF-2.

In some embodiments, the first data DAT-1 associated with at least the network device related to energy efficiency performance may include, but is not limited to, at least one of the following elements: a) energy consumption related data (e.g., transmit (Tx) and/or receive (Rx) power values, hardware (HW) temperature, network functions (NF) energy consumption values), b) energy efficiency related data (e.g., energy consumption over data volume), c) and energy saving function-related, e.g. sleep mode (SM)-related, activation data (e.g., identifiers of active energy saving functions, for example sleep modes, and/or information on changes related to energy saving functions, such as a timestamp of the change and an identifier of a new energy saving function), d) data obtained by measurement(s) according to 3GPP TS28.552, e.g., power, energy and environmental measurements, e) one or more key performance indicators (KPI) related to energy efficiency and/or energy consumption as defined by 3GPP TS28.554, Clause 6.7.

In some embodiments, the first data DAT-1 associated with at least the network device related to radio performance may include, but is not limited to, at least one of the following elements: a) cell-related data (e.g., cell ID, used carriers, radio unit and antenna array configuration, employed beam pattern configuration in case of (massive) MIMO, cell-carrier mapping, carrier-HW mapping), b) load-related data (e.g., PRB utilization, cell load statistics, DL/UL throughput values, GBR and non-GBR and PDCCH load values), c) UE performance related data.

In some embodiments, the first data DAT-1 associated with at least the network device related to performance prediction may include, but is not limited to, at least one of the following elements: a) load prediction data, b) UE mobility prediction data, c) QoS prediction data, d) energy consumption prediction data. In some embodiments, the data related to performance prediction may be obtained from other devices or entities.

In some embodiments, different aspects or parts of the first data DAT-1 may be linked to, e.g., associated with, a respective energy saving function currently used by the network device 10, 10a (e.g., O-DU) and/or a device associated with the network device (e.g., O-RU). In some embodiments, respective time stamps may be used for such association.

Some embodiments, Fig. 8B, relate to an apparatus 200' for a management device 20, the apparatus 200' comprising means 202' for causing the management device 20 to receive 400 (Fig. 9), from a network device 10, first information INF-1 characterizing at least one energy saving function ESF-1, ... supported by the network device 10 and to transmit 402 to the network device 10 second information INF-2 characterizing guidance for the network device 10 regarding a use of the at least one energy saving function ESF-1. In some embodiments, the second information INF-2 may be obtained by using the machine learning model MLM (Fig. 2).

In some embodiments, Fig. 8B, the means 202' for causing the management device 20 to perform the aforementioned receive and transmit operations may e.g. comprise at least one processor 202 (Fig. 8A), and at least one memory 204 storing instructions 206 that, when executed by the at least one processor 202, cause the management device 20 to perform the aforementioned receive and transmit operations.

In some embodiments, Fig. 2, similar to the apparatus 200 of Fig. 8A, the apparatus 200' of Fig. 8B or its functionality, respectively, may be provided within the management device 20 (Fig. 2), see the dashed rectangle 200' of Fig. 2 arranged within the management device 20. In some embodiments, however, the apparatus 200' may be provided for the management device 20, but the apparatus 200' is not necessarily integrated into the management device 20, which is indicated by a further dashed rectangle 200' of Fig. 2 arranged outside the management device 20.

Some embodiments, Fig. 2, relate to a management device 20 comprising the apparatus 200, 200' according to the embodiments.

Some embodiments, Fig. 9, relate to a method, comprising: receiving 400, by a management device 20, from a network device 10, first information INF-1 characterizing at least one energy saving function ESF-1, ... supported by the network device 10, transmitting 402, by the management device 20, to the network device 10, second information INF-2 characterizing guidance for the network device 10 regarding a use of the at least one energy saving function ESF-1, ....

Further embodiments, Fig. 2, relate to a communication system 1 comprising at least one apparatus 100, 100', 200, 200' according to the embodiments.

Further embodiments relate to a computer program comprising instructions 106 (Fig. 1A), 206 (Fig. 8A) which, when the program is executed by a computer 102, 202, cause the computer to carry out the method according to the embodiments.

In the following, further exemplary aspects and exemplary embodiments are disclosed, which, in some embodiments, may be combined with each other and/or with at least one of the aforementioned aspects.

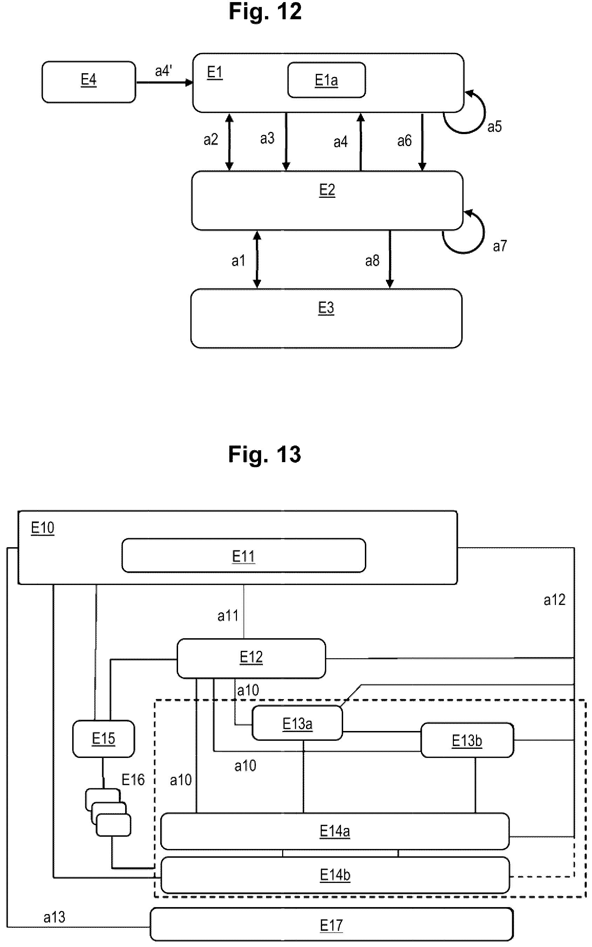

Fig. 12 schematically depicts a simplified block diagram symbolizing aspects of an O-RAN-based configuration according to some embodiments. Element E1 symbolizes a RAN Intelligent Controller (RIC), element E2 symbolizes an O-DU as a network device, element E3 symbolizes an O-RU associated with the O-DU E2, and element E4 symbolizes applications associated with the RIC E1. In some embodiments, the O-DU E2 may e.g. comprise aspects of the functionality of the apparatus 100, 100' according to the embodiments. In some embodiments, the RIC E1 may e.g. comprise aspects of the functionality of the apparatus 200, 200' according to the embodiments, e.g. in the form of an energy saving function management application E1a executable by the RIC E1.

In some embodiments, using the exemplary configuration of Fig. 12, a capability exposure and initialization stage may be provided, wherein the O-DU E2 transmits identifiers ("IDs") that denote its available and/or supported energy saving functions, which may, for example, also denote one or more power states supported by the network device 10.

In some embodiments, e.g., in the case of an O-RAN architecture as exemplarily depicted by Fig. 12, a set of energy saving functions may be determined by the O-DU E2 by using a negotiation and/or selection process involving at least one of the O-DU E2 and the O-RU E3. As an example, in some embodiments, the O-DU E2 may expose, e.g., signal to the RIC E1, e.g., in the form of the first information INF-1 (Fig. 2, 3) only a subset of energy saving functions for which the O-DU E2 can provide suitable scheduling, which in some cases e.g. enables application of respective energy saving functions of/in the associated O-RU E3. In other words, in some cases, the IDs which denote energy saving functions that are currently available at and/or supported by the network device, e.g. O-DU E2, may represent a selected subset of all energy saving functions provided by the O-DU E2, e.g. depending on the negotiation(s) (see, for example, also block 310a of Fig. 7) with the O-RU E3. Thus, in some embodiments, the network device 10, e.g., O-DU E2, may determine, by negotiating with a further device, such as, e.g., an O-RAN radio unit, O-RU, E3 associated with the O-DU E2, a selected subset of energy saving functions provided by the O-DU E2. In some embodiments, the network device 10, E2 may transmit this selected subset of energy saving functions, e.g., as the first information INF-1 or as a part of the first information INF-1.

In some embodiments, as already mentioned above with reference to Fig. 7, determining 310 the first information INF-1 comprises evaluating 310a a configuration of the network device. In other words, in some embodiments, the determining 310 does not comprise a negotiation and/or selection process.

In some embodiments, determining 310 the first information INF-1 may also comprise both evaluating 310a the configuration of the network device and a negotiation and/or selection process with at least one further device.

In some embodiments, as already mentioned above, evaluating 310a (Fig. 7) the configuration of the network device 10 may comprise an evaluation of capabilities of the network device 10 so that, as an example, in some embodiments, the network device, e.g., O-DU, may expose only a set of energy saving functions (as may, e.g., be characterized by the first information INF-1), for which set the O-DU can provide a suitable scheduling.

In some embodiments, the energy saving function management application E1a, which may be hosted in the RIC E1 (e.g., in a Non-RT part and/or in a Near-RT part of the RIC E1), may store the set of IDs.

In some embodiments, the energy saving function management application E1a may initialize an ML model MLM (Fig. 2), e.g., to learn the best guidance regarding the usage, e.g., enablement, of energy saving functions, e.g., for the O-DU E2.

In some embodiments, the input for the ML model MLM may comprise collected data, e.g., from a network associated with the configuration of Fig. 12, and, optionally, further enrichment information, and the output of the ML model MLM may characterize guidance regarding the usage, e.g., enablement, of energy saving functions. In some embodiments, the guidance may e.g. comprise a set of IDs identifying energy saving functions ESF-1, ... that should be enabled, e.g. optionally along with time periods most suitable for the activation, etc.

In some embodiments, e.g., in case of a 3GPP network (e.g., as opposed to the exemplarily depicted O-RAN-based architecture of Fig. 12), similarly, a network management system may initialize the ML model MLM, whose input may e.g. be collected network data from the 3GPP network, and whose output may e.g. be power state guidance for the network device, e.g. base station, the power state guidance e.g. characterizing at least a set of power state IDs to be enabled, optionally along with time periods most suitable for the activation.

Returning to the configuration of Fig. 12, in some embodiments, a configuration stage may be provided in which the energy saving function management application E1a configures an enablement status of the at least one energy saving function ESF-1, ....

In some embodiments, at the beginning of the configuration stage, the energy saving function management application E1a may start from a default, e.g., initial, configuration, which may comprise at least one of the following: a) a default setting provided by the vendor, and/or b) a manual/custom setting by the operator, and/or c) all energy saving functions enabled, d) no energy saving function enable, e) an initial setting that comes from another energy saving function management application instance (not shown)., f) etc.

In some embodiments, initially, the energy saving function management application E1a provides guidance to the network device E2 based on the abovementioned initial configuration. Thus, in other words, in some embodiments, it is proposed to provide to the network device 10, E2, e.g., by the further device 20 (Fig. 2), an initial configuration CFG-INIT (Fig. 2), e.g., as initial guidance for the network device E2 regarding the use of the at least one energy saving function ESF-1.

In some embodiments, the initial configuration CFG-INIT may form part of the second information INF-2. In some embodiments, the initial configuration CFG-INIT does not form part of the second information INF-2 and may, e.g., be transmitted separately from the second information INF-2, e.g., prior to the second information INF-2.

In some embodiments, in an initial stage, the guidance for the energy saving function(s) may e.g. follow a comparatively conservative approach, e.g., enabling no energy saving functions, or only a comparatively small number of (e.g., "trusted") energy saving functions, e.g., in limited time windows such as, e.g., during night time. In some embodiments, "trust" as used in relation to the abovementioned energy saving functions may characterize, e.g., be, a result of vendor-shared information and/or past experience with the same product, e.g. in other contexts/deployments.

In some embodiments, the energy saving function management application E1a may repeatedly, e.g., continuously or periodically, collect network configuration and performance and energy saving function-related data (including, e.g., load, energy consumption/efficiency, and other performance management data, and, optionally, prediction data and activation/utilization data associated with at least one energy saving function), see, for example, block 420 of Fig. 11.

In some embodiments, an adaptation stage may be provided (see, for example, blocks 428, 429 of Fig. 11), e.g., based on the, for example continuously or periodically, collected data. In some embodiments, the energy saving function management application E1a provides adapted guidance regarding the usage, e.g., enablement, of energy saving functions, to the O-DU during the adaptation stage.

In some embodiments, the adapted guidance may, for example, include at least one of: a) a set of energy saving functions to be enabled or disabled, and/or b) time periods of enablement/disablement, and, optionally, more information. In some embodiments, the collection of the network configuration and performance and energy saving function-related data and an analysis of the network configuration and performance and energy saving function-related data may together form an adaptation loop (see, for example, Fig. 11, for example element 429 of Fig. 11) that enables reinforcement learning, e.g., in the energy saving function management application E1a (Fig. 12), e.g., to learn an optimized guidance regarding the usage, e.g., enablement, of energy saving functions, e.g., in the long run. In some embodiments, the learning can be characterized by a respective adaptation of, e.g., parameters of the ML model MLM. In other words, in some embodiments, the ML model may be trained based on at least one of: a) the network configuration and performance and energy saving function-related data, b) an analysis of the network configuration and performance and energy saving function-related data.

In some embodiments, Fig. 12, the application of the principle according to the embodiments may involve more than one network device, e.g., O-DU E2 and/or more than one O-RU E3, wherein in some embodiments, a configuration may e.g. be performed between some, for example all, connected pairs of O-RUs and O-DUs, and between some, e.g., all, O-DUs and the RIC E1. Also, in some embodiments, data may be collected from some, e.g., all, O-DUs, and a training of the ML model MLM (Fig. 2) may e.g. be done jointly for several, e.g. all, O-DUs.

In some embodiments, different sets of IDs characterizing the respective energy saving functions may be provided for each O-DU. In some embodiments, e.g., in the operating stage, configuration and/or guidance related to a use of the energy saving functions may be performed jointly for some, e.g., all O-DUs, or, e.g., alternatively, for a subset of the O-DUs, wherein in some cases a global optimization may be achieved.

Returning to Fig. 12, double arrow a1 symbolizes an exemplary capability exchange and/or an initialization, wherein the O-DU E2 and the O-RU E3 e.g. negotiate which energy saving function(s) they provide and/or may use. Similarly, double arrow a2 symbolizes an exemplary capability exchange and/or an initialization between the O-DU E2 and the RIC E1. In some embodiments, the capability exchange a2 of Fig. 12 may e.g. comprise transmitting the first information INF-1 (as e.g. negotiated by O-DU E2 with O-RU E3) to the RIC E1, e.g. to the energy saving function management application E1a e.g. performing aspects of the apparatus 200 (Fig. 2). Arrow a3 of Fig. 12 symbolizes an exemplary initial configuration related to energy saving functions to be used by the O-DU E2 in an initial phase. Arrows a4, a4' symbolize a data collection, e.g. by the energy saving function management application E1a, e.g. during the adaptation stage. Arrow a5 symbolizes the ML model performing inference, e.g., during the adaptation stage. Arrow a6 symbolizes the adapted guidance regarding the usage, e.g., enablement, of energy saving functions, to the O-DU E2, e.g., during the adaptation stage, as e.g. provided by the energy saving function management application E1a, e.g. based on the trained ML model MLM. Arrows a7, a8 symbolize an activation of energy saving function(s) by the O-DU E2, e.g., for the O-DU E2 (arrow a7) and, optionally, for the O-RU E3, based on the adapted guidance a6.

In some embodiments, the O-DU E2 may, for example dynamically, select and/or activate the energy saving function(s) as indicated by the adapted guidance a6, e.g. within respective time windows, which, in some embodiments, may also be characterized by the adapted guidance, see, for example, also Fig. 5, the timing information INF-TIM-1, ....

In some embodiments, for example if/when the O-DU E2 changes its state with respect to energy saving function(s) (i.e., activates or deactivates one or more energy saving function(s)), the O-DU E2 may configure the O-RU E3 correspondingly.

Fig. 13 schematically depicts a simplified block diagram according to some embodiments, exemplarily depicting aspects of an O-RAN-Architecture-based network configuration as may be used together with the principle of the embodiments. Element E10 symbolizes a Service Management and Orchestration (SMO) Framework, element E11 symbolizes a Non-Real Time RIC (Non-RT RIC), element E12 symbolizes a Near-Real Time RIC (Near-RT RIC). Element E13a symbolizes an O-RAN Central Unit - Control Plane (O-CU-CP), and element E13b symbolizes an O-RAN Central Unit - User Plane (O-CU-UP). Element E14a symbolizes an O-DU, and element E14b symbolizes an O-RU. Element e15 symbolizes an O-eNB, elements e16 symbolize user equipment, and element e17 symbolizes an O-Cloud.

In some embodiments, an energy saving function management application, which may, e.g., perform aspects of the apparatus 200, 200', may be hosted in different entities. In some embodiments, different architecture variations of intelligent O-DU/O-RU energy saving function control and/or guidance may be envisioned.

In some embodiments, the network device 10 (Fig. 2), e.g. base station, may use a fully aggregated architecture or may use different flavors of disaggregated architectures (e.g. O-RU + O-DU + O-CU, O-RU + O-DU/CU, O-RU/DU + O-CU).

In some embodiments, the principle according to the embodiments may e.g. be used with O-RU / O-DU split architectures, e.g. with O-RU devices and O-DU devices from different vendors.

In some embodiments, Fig. 13, the energy saving function management application, which may, e.g., perform aspects of the apparatus 200, 200', may be hosted in an rApp (not shown) of the Non-RT RIC E11 or in an xApp (not shown) of the Near-RT RIC E12.

In the following, exemplary embodiments are described where the ML model MLM (Fig. 2) may be hosted in the Near-RT RIC E12, and the functioning of the ML model MLM may be based on data retrieved from the O-DUE14a via an E2 interface, see link a10 of Fig. 13. In some embodiments, another, for example more central, location (such as e.g., Non-RT RIC E11) may be used, e.g., if an amount of available data is comparatively large.

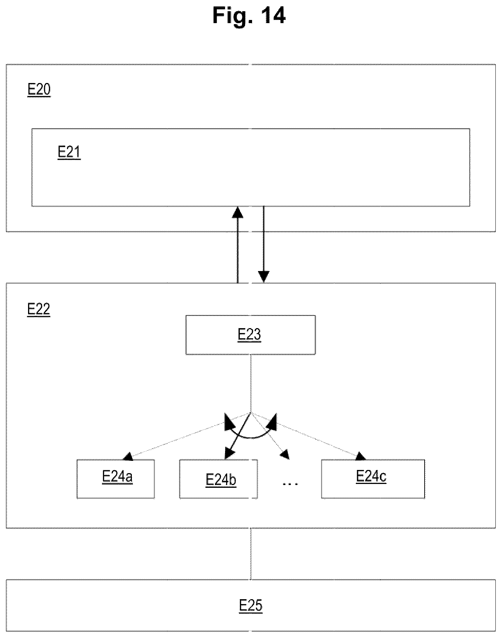

Fig. 14 schematically depicts a simplified block diagram according to some embodiments. Element E20 symbolizes an O-RAN Near-RT RIC, element E21 symbolizes an xApp hosting an energy saving function management application, which may, e.g., perform aspects of the apparatus 200, 200'. Element E22 symbolizes an O-RAN E2 Node, e.g. O-DU, E23 symbolizes a control associated with several exemplary energy saving function(s) E24a,E24b, ..., E24c, and element E25 symbolizes an exemplary O-RU.

In the following, exemplary aspects and embodiments related to training and inference of the ML model MLM (Fig. 2) are discussed, wherein at least some aspects of the training and inference may e.g. be performed at the Near-RT RIC E20 (Fig. 20).

In some embodiments, a functional split among different entities of an O-RAN architecture as specified below may be used:
1) Service Management and Orchestration/Non-RT RIC: a) perform deployment of ML model MLM, b) send enrichment information to the Near-RT RIC for inference, e.g., via an O-RAN A1 interface, cf. link a11 of Fig. 13.
2) Near-RT RIC: a) support ML model deployment from the SMO, e.g., via the O-RAN O1/O2 interface, cf. links a12, a13 of Fig. 13, b) subscribe to and retrieve performance and/or failure indicators, measurement reports, UE context information and RAN configurations from O-RAN E2 nodes via the O-RAN E2 interface a10 (Fig. 13), e.g., for the purpose of optimization of the use of the at least one energy saving function, c) optionally, retrieve enrichment information from Non-RT RIC E11 via the O-RAN A1 interface a11, and associate enrichment information with collected measurements and configurations, d) perform training, e.g., reinforcement-based training of the ML model and inference using the ML model, e) send control or policy information, e.g. in form of at least one message, e.g., for optimization of the use of the at least one energy saving function to O-RAN E2 nodes via the E2 interface a10.
3) E2 nodes (e.g., O-DU E14a in disaggregated architecture): a) support reporting the number of energy saving functions and associated identifiers (e.g., "IDs") to Near-RT RIC E11 over O-RAN E2 interface a10 (Fig. 13), b) support reporting of at least one of: b1) performance indicators (optionally including energy efficiency KPIs), b2) measurement reports, b3) UE context information, b4) RAN configuration(s), e.g., with predetermined granularity, e.g. to Near-RT RIC via the O-RAN E2 interface a10, c) execute control/policy message received from the Near-RT RIC E12 via the O-RAN E2 interface a10.

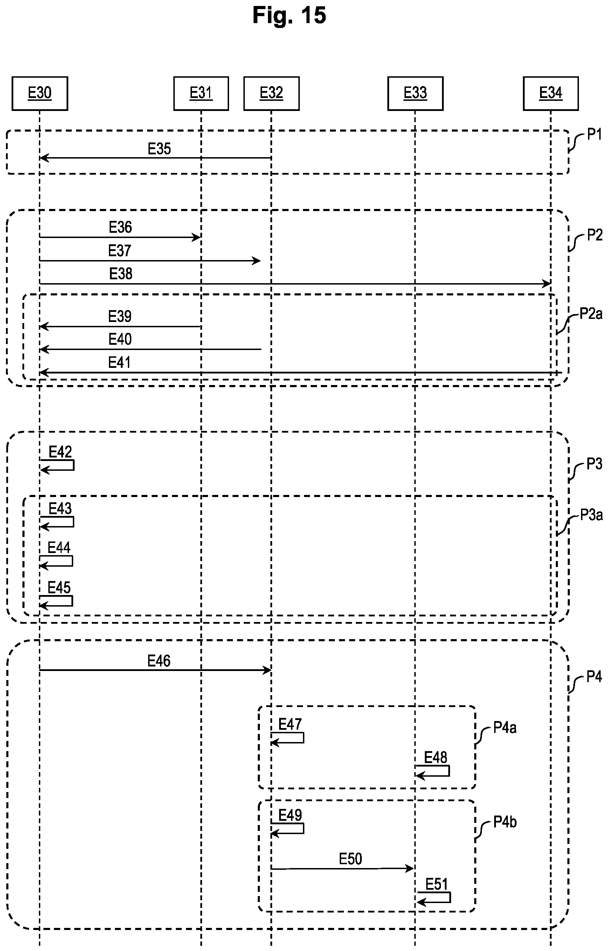

An exemplary procedure flow related to an operation of a Near-RT RIC according to some embodiments is illustrated in the signaling diagram of Fig. 15. In Fig. 15, element E30 symbolizes the Near-RT RIC, element e31 symbolizes an O-CU, element e32 symbolizes an O-DU, element e33 symbolizes an O-RU, and element e34 symbolizes an external entity, e.g. application. In some embodiments, element P1 symbolizes an initialization phase, element P2 symbolizes a data collection (e.g., for training and/or inference of the ML model MLM), with an optional loop section P2a, element P3 symbolizes a flow related to the ML model, with an optional loop section P3a, element P4 symbolizes a guidance phase with two optional variants P4a, P4b.

Continuing with Fig. 15, element E35 symbolizes an exposure of capabilities regarding energy saving functions, e.g. similar or identical to transmission 300 of the first information INF-1 (Fig. 3). Elements E36, E37 E38 symbolize different data collection requests from the Near-RT RIC E30 to the different entities E31, E32, E34, i.e., to collect data for training of and/or inference based on the ML model MLM. Elements E39, E40, E41 symbolizes a corresponding, respective, data retrieval, which, in some embodiments, may be performed repeatedly, e.g. according to the loop section P2a.

Element E42 symbolizes an initialization of the ML model, element E43 symbolizes processing and/or analysis of data associated with the ML model (e.g., input data for the ML model), element E44 symbolizes an adjustment of the ML model (e.g., a training, wherein, for example, parameters such as e.g. weights and the like of the ML model are adapted), and element E45 symbolizes performing an inference using the ML model MLM. In some embodiments, elements E43, E44, E45 may be performed repeatedly, e.g. according to the loop section P3a.

Element E46 symbolizes the Near-RT RIC E30 providing guidance to the O-DU E32, e.g., based on the inference E45, wherein the guidance may e.g. comprise transmitting the second information INF-2 to the O-DU E32, see, for example, also block 402 of Fig. 9.

Element E47 symbolizes updating a scheduling strategy by the O-DU E32 and element E48 symbolizes a selection of energy saving function(s) internally by the O-RU E33, e.g., according to the optional variant P4a of the guidance phase P4.

Element E49 symbolizes a selection of energy saving function(s) by the O-DU E32, element E50 symbolizes the O-DU E32 requesting a new energy saving function configuration from the O-RU E33, and element E51 symbolizes the O-RU E33 applying the requested new energy saving function configuration, e.g., according to the optional variant P4b of the guidance phase P4.

In some embodiments, Fig. 15, it is assumed that the ML model MLM is already deployed in the Near-RT RIC E30. Elements E35 and E42 can be considered to represent a capability exchange and initialization stage, and a configuration stage, where the O-DU capabilities regarding the at least one energy saving function are exposed to the Near-RT RIC E30, and where the ML model MLM is initialized (element E42).

In some embodiments, Fig. 15, the O-DU E32 may enquire the O-RU E33 for its related O-RU capabilities (e.g., associated with energy saving), which is not illustrated in Fig. 15 for simplicity. In some embodiments, implementation, e.g., by a vendor of the O-RU E33 and/or of the O-DU E32, may determine, which and how many energy saving functions are supported, if any. In some embodiments, the Near-RT RIC E30 hosts the xApp, which is not shown separately in Fig. 15. As an example, in some embodiments, the Near-RT RIC E39 may comprise the xApp(s) as well as Near-RT RIC Platform Functions.

In some embodiments, Fig. 15, elements E43, E44, E45 constitute an adaptation stage (e.g., for reinforcement learning and inference using the ML model MLM). In some embodiments, in elements E39, E40, E41, measurements and RAN configurations for each sleep mode/energy saving feature are collected continuously or periodically for the ML model MLM. In some embodiments, such configurations might be specific for each energy saving function, but might also change within an operation of an energy saving function.

In some embodiments, the ML model MLM might optionally use enrichment information (e.g., UE location information, UE application information) obtained from other sources such as an application server, see element E41 of Fig. 15.

In some embodiments, the inference operation E45 will output information related to the guidance for the use of the at least one energy saving function.

In some embodiments, a reinforcement-based approach adapts the guidance from the ML model MLM, e.g. according to a received reward, e.g., based on a state change of the network.

In some embodiments, an enablement guidance change related to the at least one energy saving function may be defined as "Action" in an reinforcement learning approach, whereas network KPIs and optionally additional enrichment information may be used to define a "State".

In some embodiments, a "Reward" may, for example, be based on an energy efficiency of at least one of the O-DU E32 and/or the O-RU E33 (or a base station, e.g., when considering other exemplary configurations than the exemplarily considered O-RAN-based approach associated with Fig. 15).

Table 1 below illustrates respective examples for the definition of "Action", "State", and "Reward" according to some embodiments.

**Table 1:**

| Action | State | | Reward |
|---|---|---|---|
| Enable/ disable energy saving function (or respective identifiers, "IDs"), for example in specific time window | Performance and energy consumption/efficiency data, e.g.: | | (Average/) weighted sum of energy efficiency metric of O-DU/O-CU/O-RU or BS per activated energy saving function ID and number of activated energy saving functions |
| | | • NF/O-DU/O-RU energy consumption/efficiency (e.g., energy consumption over data volume) | |
| | | • PDCP data volume delivered in the downlink and/or uplink | |
| | | • Traffic load variation, e.g., PRB utilization rate, RRC connection number, etc. | |
| | | • Tx and Rx power values, etc. | |
| | | • cell load statistics, DL/UL throughput values, GBR and non-GBR and PDCCH load values | |
| | | | |
| | UE measurements: | | |
| | | • RSRPs/RSRQs/SINR values (cell level and beam level), | |
| | | • moving velocity, | |
| | | • cell-related data (e.g., cell ID, used carriers, radio unit and antenna array configuration, employed beam pattern configuration in case of (massive) MIMO, cell-carrier mapping, carrier-HW mapping | |
| | | | |
| | Configuration management data: | | |
| | | • SM/ESF enabled/disabled | |
| | | | |
| | Network analytics data: | | |
| | | • Load prediction, UE mobility prediction, QoS prediction, energy consumption prediction data | |
| | | • E.g., from NWDAF observed service experience analytics | |
| | | • E.g., from MDA traffic load trends, energy efficiency problematic objects | |
| | | • E.g., from prediction or analytics rApps/xApps | |
| | | | |
| | Enrichment information: | | |
| | | • UE location information | |
| | | • UE application information | |

Returning to Fig. 15, in some embodiments, a generation of a control/policy message E46 may be triggered, which may be sent to the E2 Node (e.g., O-DU E32) via the E2 interface a10 (Fig. 13). In some embodiments, the O-DU E32 may either apply or select from the respective energy saving function(s), see alternative P4a, or the O-DU E32 may adjust its behavior related to the type and content of the control/policy message E46, see alternative P4b. Additionally, a configuration of the O-RU E33 may follow, e.g., from the O-DU E32, see element E50 of Fig. 15, e.g. over an O-FH interface (not shown) between the O-DU E32 and the O-RU E33.

In some embodiments, prediction information (e.g., about expected cell load and UE mobility) may be obtained, e.g., from other ML models (e.g., from other xApps via a cross xApp interface, or rApps over R1, or Y1), e.g., as an input to the ML model MLM, or the prediction information may be generated within, e.g., by the ML model MLM (not shown). Note that an API between the Near-RT RIC E30 and the xApp, which may be provided in some embodiments, is not shown in Fig. 15.

In some embodiments, the principle according to the embodiments enables to control, e.g., coordinate, energy saving functions ESF-1, ... associated with network devices 10, 10a such as e.g. base stations of a wireless communication network 1, e.g. independent of a specific type or vendor of the different network devices.

In some embodiments, the various energy saving functions ESF-1, ... are not required to be standardized or coordinated in another way. Rather, the principle according to the embodiments enables to control different network devices 10, 10 regarding their use of energy saving functions even if these energy saving functions are proprietary or specific to certain types of hardware, and the like. Furthermore, in some embodiments, the principle according to the embodiments may also be applied even if the characteristic(s) of the various energy saving functions of the network device s10, 10a are not know or undocumented. As an example, in some embodiments, using the ML model MLM, it can be learned how such "undocumented" energy saving functions affect, for example, the network performance and/or how such "undocumented" energy saving functions contribute to energy efficiency, thus enabling to provides guidelines how to apply even such "undocumented" energy saving functions, e.g., in the best manner.

## Claims

1. An apparatus (100) for a network device (10), the apparatus (100) comprising means for causing the network device (10) to:
expose its capabilities related to at least one energy saving function for which the network device can provide a suitable scheduling by transmitting (300) first information (INF-1) characterizing the at least one energy saving function (ESF-1, ...) supported by the network device (10) to a further device (20); wherein the first information (INF-1) characterizes one or more identifiers (ID-1, ID-2, ID-3, ...), each of the one or more identifiers (ID-1, ID-2, ID-3, ...) being associated with a specific energy saving function (ESF-1, ESF-2, ESF-3, ...);
receive (302), from the further device (20), second information (INF-2) characterizing guidance for the network device (10) regarding a use of the at least one energy saving function (ESF-1), wherein the second information (INF-2) characterizes at least one identifier of the one or more identifiers (ID-1, ID-2, ID-3, ...), wherein the second information (INF-2) characterizes timing information (INF-TIM-1, INF-TIM-2, INF-TIM-3, ...) indicating at least one of a) a point in time and/or b) a time period for activation of the at least one energy saving function (ESF-1, ...); and
activate the at least one energy saving function based on the second information.

2. The apparatus (100) according to claim 1, wherein the second information (INF-2) characterizes an enablement status (STAT-EN-1, STAT-EN-2, STAT-EN-3, ...) indicating whether the at least one energy saving function (ESF-1, ...) should be enabled or disabled.

3. The apparatus (100) according to any of the preceding claims, wherein the instructions (106), when executed by the at least one processor (102), cause the network device (10; E2) to determine (310) the first information (INF-1), wherein determining (310) the first information (INF-1) comprises at least one of: a) evaluating (310a) a configuration of the network device (10) and/or b) negotiating (310b) with a further device (E3).

4. A network device (10) comprising the apparatus (100; 100') according to any of the preceding claims.

5. A method, comprising:
exposing capabilities of a network device related to at least one energy saving function for which set the network device can provide a suitable scheduling by transmitting (300), by the network device (10), first information (INF-1) characterizing at least one energy saving function (ESF-1, ...) supported by the network device (10) to a further device (20), wherein the first information (INF-1) characterizes one or more identifiers (ID-1, ID-2, ID-3, ...), each of the one or more identifiers (ID-1, ID-2, ID-3, ...) being associated with a specific energy saving function (ESF-1, ESF-2, ESF-3, ...); and
receiving (302), by the network device (10), from the further device (20), second information (INF-2) characterizing guidance for the network device (10) regarding a use of the at least one energy saving function (ESF-1), wherein the second information (INF-2) characterizes at least one identifier of the one or more identifiers (ID-1, ID-2, ID-3, ...), wherein the second information (INF-2) characterizes timing information (INF-TIM-1, INF-TIM-2, INF-TIM-3, ...) indicating at least one of a) a point in time and/or b) a time period for activation of the at least one energy saving function (ESF-1, ...); and
activating the at least one energy saving function based on the second information.

6. An apparatus (200) for a management device (20), the apparatus (200) comprising means for causing the management device (20) to:
receive (400), from a network device (10), exposed capabilities including first information (INF-1) characterizing at least one energy saving function (ESF-1, ...) supported by the network device (10) and for which set the network device can provide a suitable scheduling, wherein the first information (INF-1) characterizes one or more identifiers (ID-1, ID-2, ID-3, ...), each of the one or more identifiers (ID-1, ID-2, ID-3, ...) being associated with a specific energy saving function (ESF-1, ESF-2, ESF-3, ...);
transmit (402) to the network device (10) second information (INF-2) characterizing guidance for the network device (10) for causing the network device to activate the at least one energy saving function based on the second information, wherein the second information (INF-2) characterizes at least one identifier of the one or more identifiers (ID-1, ID-2, ID-3, ...), wherein the second information (INF-2) characterizes timing information (INF-TIM-1, INF-TIM-2, INF-TIM-3, ...) indicating at least one of a) a point in time and/or b) a time period for activation of the at least one energy saving function (ESF-1, ...).

7. The apparatus (200) according to claim 6, wherein the second information (INF-2) characterizes an enablement status (STAT-EN-1, STAT-EN-2, STAT-EN-3, ...) indicating whether the at least one energy saving function (ESF-1, ...) should be enabled or disabled.

8. The apparatus (200) according to any of the claims 6 to 7, wherein the instructions (206), when executed by the at least one processor (202), cause the management device (20) to determine (412) the second information (INF-2) based at least on the first information (INF-1) using a machine learning model (MLM).

9. A method for a management device (20), comprising:
receiving (400), from a network device (10), exposed capabilities including first information (INF-1) characterizing at least one energy saving function (ESF-1, ...) supported by the network device (10) and for which set the network device can provide a suitable scheduling, wherein the first information (INF-1) characterizes one or more identifiers (ID-1, ID-2, ID-3, ...), each of the one or more identifiers (ID-1, ID-2, ID-3, ...) being associated with a specific energy saving function (ESF-1, ESF-2, ESF-3, ...);
transmitting (402) to the network device (10) second information (INF-2) characterizing guidance for the network device (10) for causing the network device to activate the at least one energy saving function based on the second information, wherein the second information (INF-2) characterizes at least one identifier of the one or more identifiers (ID-1, ID-2, ID-3, ...), wherein the second information (INF-2) characterizes timing information (INF-TIM-1, INF-TIM-2, INF-TIM-3, ...) indicating at least one of a) a point in time and/or b) a time period for activation of the at least one energy saving function (ESF-1, ...).

## Patentansprüche

1. Einrichtung (100) für eine Netzwerkvorrichtung (10), wobei die Einrichtung (100) Mittel zum Veranlassen der Netzwerkvorrichtung (10) zu Folgendem umfasst:
Exponieren ihrer Fähigkeiten, die sich auf mindestens eine Energiesparfunktion beziehen, für die die Netzwerkvorrichtung eine geeignete Planung bereitstellen kann, durch Übertragen (300) von ersten Informationen (INF-1), die die mindestens eine Energiesparfunktion (ESF-1, ...) charakterisieren, die von der Netzwerkeinrichtung (10) unterstützt wird, zu einer weiteren Vorrichtung (20); wobei die ersten Informationen (INF-1) eine oder mehrere Kennungen (ID-1, ID-2, ID-3, ...) charakterisieren, wobei jede der einen oder der mehreren Kennungen (ID-1, ID-2, ID-3, ...) mit einer speziellen Energiesparfunktion (ESF-1, ESF-2, ESF-3, ...) verknüpft ist;
Empfangen (302) von zweiten Informationen (INF-2), die eine Führung für die Netzwerkvorrichtung (10) hinsichtlich einer Verwendung der mindestens einen Energiesparfunktion (ESF-1) charakterisieren, von der weiteren Vorrichtung (20), wobei die zweiten Informationen (INF-2) mindestens eine Kennung der einen oder der mehreren Kennungen (ID-1, ID-2, ID-3, ...) charakterisieren, wobei die zweiten Informationen (INF-2) Timinginformationen (INF-TIM-1, INF-TIM-2, INF-TIM-3, ...) charakterisieren, die mindestens eines von a) einem Zeitpunkt und/oder b) einer Zeitperiode zur Aktivierung der mindestens einen Energiesparfunktion (ESF-1, ...) anzeigen; und
Aktivieren der mindestens einen Energiesparfunktion auf Basis der zweiten Informationen.

2. Einrichtung (100) nach Anspruch 1, wobei die zweiten Informationen (INF-2) einen Aktivierungsstatus (STAT-EN-1, STAT-EN-2, STAT-EN-3, ...) charakterisieren, der anzeigt, ob die mindestens eine Energiesparfunktion (ESF-1, ...) aktiviert oder deaktiviert werden sollte.

3. Einrichtung (100) nach einem der vorhergehenden Ansprüche, wobei die Anweisungen (106), wenn sie von dem mindestens einen Prozessor (102) ausgeführt werden, die Netzwerkvorrichtung (10; E2) veranlassen, die ersten Informationen (INF-1) zu bestimmen (310), wobei das Bestimmen (310) der ersten Informationen (INF-1) mindestens eines von Folgendem umfasst: a) Beurteilen (310a) einer Auslegung der Netzwerkvorrichtung (10) und/oder b) Verhandeln (310b) mit einer weiteren Vorrichtung (E3).

4. Netzwerkvorrichtung (10) die die Einrichtung (100; 100') nach einem der vorhergehenden Ansprüche umfasst.

5. Verfahren, das Folgendes umfasst:
Exponieren von Fähigkeiten einer Netzwerkvorrichtung, die sich auf mindestens eine Energiesparfunktion beziehen, für die Satz die Netzwerkvorrichtung eine geeignete Planung bereitstellen kann, durch Übertragen (300) von ersten Informationen (INF-1) durch die Netzwerkvorrichtung (10), die mindestens eine Energiesparfunktion (ESF-1, ...) charakterisieren, die von der Netzwerkeinrichtung (10) unterstützt wird, zu einer weiteren Vorrichtung (20), wobei die ersten Informationen (INF-1) eine oder mehrere Kennungen (ID-1, ID-2, ID-3, ...) charakterisieren, wobei jede der einen oder der mehreren Kennungen (ID-1, ID-2, ID-3, ...) mit einer speziellen Energiesparfunktion (ESF-1, ESF-2, ESF-3, ...) verknüpft ist; und
Empfangen (302) von zweiten Informationen (INF-2), die eine Führung für die Netzwerkvorrichtung (10) hinsichtlich einer Verwendung der mindestens einen Energiesparfunktion (ESF-1) charakterisieren, durch die Netzwerkvorrichtung (10) von der weiteren Vorrichtung (20), wobei die zweiten Informationen (INF-2) mindestens eine Kennung der einen oder der mehreren Kennungen (ID-1, ID-2, ID-3, ...) charakterisieren, wobei die zweiten Informationen (INF-2) Timinginformationen (INF-TIM-1, INF-TIM-2, INF-TIM-3, ...) charakterisieren, die mindestens eines von a) einem Zeitpunkt und/oder b) einer Zeitperiode zur Aktivierung der mindestens einen Energiesparfunktion (ESF-1, ...) anzeigen; und
Aktivieren der mindestens einen Energiesparfunktion auf Basis der zweiten Informationen.

6. Einrichtung (200) für eine Verwaltungsvorrichtung (20), wobei die Einrichtung (200) Mittel zum Veranlassen der Verwaltungsvorrichtung (20) zu Folgendem umfasst:
Empfangen (400) von exponierten Fähigkeiten, die erste Informationen (INF-1) beinhalten, die mindestens eine Energiesparfunktion (ESF-1, ...) charakterisieren, die von der Netzwerkvorrichtung (10) unterstützt wird und für die Satz die Netzwerkvorrichtung eine geeignete Planung bereitstellen kann, von der Netzwerkvorrichtung (10), wobei die ersten Informationen (INF-1) eine oder mehrere Kennungen (ID-1, ID-2, ID-3, ...) charakterisieren, wobei jede der einen oder der mehreren Kennungen (ID-1, ID-2, ID-3, ...) Mit einer speziellen Energiesparfunktion (ESF-1, ESF-2, ESF-3, ...) verknüpft ist;
Übertragen (402) von zweiten Informationen (INF-2), die eine Führung für die Netzwerkvorrichtung (10) zum Veranlassen der Netzwerkvorrichtung, die mindestens eine Energiesparfunktion auf Basis der zweiten Informationen zu aktivieren, charakterisieren, zur Netzwerkfunktion (10), wobei die zweiten Informationen (INF-2) mindestens eine Kennung der einen oder der mehreren Kennungen (ID-1, ID-2, ID-3, ...) charakterisieren, wobei die zweiten Informationen (INF-2) Timinginformationen (INF-TIM-1, INF-TIM-2, INF-TIM-3, ...) charakterisieren, die mindestens eines von a) einem Zeitpunkt und/oder b) einer Zeitperiode zur Aktivierung der mindestens einen Energiesparfunktion (ESF-1, ...) anzeigen.

7. Einrichtung (200) nach Anspruch 6, wobei die zweiten Informationen (INF-2) einen Aktivierungsstatus (STAT-EN-1, STAT-EN-2, STAT-EN-3, ...) charakterisieren, der anzeigt, ob die mindestens eine Energiesparfunktion (ESF-1, ...) aktiviert oder deaktiviert werden sollte.

8. Einrichtung (200) nach einem der Ansprüche 6 bis 7, wobei die Anweisungen (206), wenn sie von dem mindestens einen Prozessor (202) ausgeführt werden, die Verwaltungsvorrichtung (20) veranlassen, die zweiten Informationen (INF-2) mindestens auf Basis der ersten Informationen (INF-1) unter Verwendung eines Maschinenlernmodells (MLM) zu bestimmen (412).

9. Verfahren für eine Verwaltungsvorrichtung (20), das Folgendes umfasst:
Empfangen (400) von exponierten Fähigkeiten, die erste Informationen (INF-1) beinhalten, die mindestens eine Energiesparfunktion (ESF-1, ...) charakterisieren, die von der Netzwerkvorrichtung (10) unterstützt wird und für die Satz die Netzwerkvorrichtung eine geeignete Planung bereitstellen kann, von der Netzwerkvorrichtung (10), wobei die ersten Informationen (INF-1) eine oder mehrere Kennungen (ID-1, ID-2, ID-3, ...) charakterisieren, wobei jede der einen oder der mehreren Kennungen (ID-1, ID-2, ID-3, ...) mit einer speziellen Energiesparfunktion (ESF-1, ESF-2, ESF-3, ...) verknüpft ist;
Übertragen (402) von zweiten Informationen (INF-2), die eine Führung für die Netzwerkvorrichtung (10) zum Veranlassen der Netzwerkvorrichtung, die mindestens eine Energiesparfunktion auf Basis der zweiten Informationen zu aktivieren, charakterisieren, zur Netzwerkfunktion (10), wobei die zweiten Informationen (INF-2) mindestens eine Kennung der einen oder der mehreren Kennungen (ID-1, ID-2, ID-3, ...) charakterisieren, wobei die zweiten Informationen (INF-2) Timinginformationen (INF-TIM-1, INF-TIM-2, INF-TIM-3, ...) charakterisieren, die mindestens eines von a) einem Zeitpunkt und/oder b) einer Zeitperiode zur Aktivierung der mindestens einen Energiesparfunktion (ESF-1, ...) anzeigen.

## Revendications

1. Appareil (100) pour un dispositif réseau (10), l'appareil (100) comprenant des moyens pour amener le dispositif réseau (10) à :
exposer ses capacités liées à au moins une fonction d'économie d'énergie pour laquelle le dispositif peut fournir une planification appropriée en transmettant (300) des premières informations (INF-1) caractérisant l'au moins une fonction d'économie d'énergie (ESF-1, ...) prise en charge par le dispositif réseau (10) à un dispositif (20) supplémentaire ; dans lequel les premières informations (INF-1) caractérisent un ou plusieurs identifiants (ID-1, ID-2, ID-3, ...), chacun des un ou plusieurs identifiants (ID-1, ID-2, ID-3, ...) étant associé à une fonction d'économie d'énergie (ESF-1, ESF-2, ESF-3, ...) spécifique ;
recevoir (302) du dispositif (20) supplémentaire des deuxièmes informations (INF-2) caractérisant des directives pour le dispositif réseau (10) concernant une utilisation de l'au moins une fonction d'économie d'énergie (ESF-1), dans lequel les deuxièmes informations (INF-2) caractérisent au moins un identifiant des un ou plusieurs identifiants (ID-1, ID-2, ID-3, ...), dans lequel les deuxièmes informations (INF-2) caractérisent des informations de temporisation (INF-TIM-1, INF-TIM-2, INF-TIM-3, ...) indiquant au moins un parmi a) un point temporel et/ou b) une période de temps pour l'activation de l'au moins une fonction d'économie d'énergie (ESF-1, ...) ; et
activer l'au moins une fonction d'économie d'énergie sur la base des deuxièmes informations.

2. Appareil (100) selon la revendication 1, dans lequel les deuxièmes informations (INF-2) caractérisent un statut d'activation (STAT-EN-1, STAT-EN-2, STAT-EN-3, ...) indiquant si l'au moins une fonction d'économie d'énergie (ESF-1, ...) doit être activée ou désactivée.

3. Appareil (100) selon l'une des revendications précédentes, dans lequel les instructions (106), lorsqu'elles sont exécutées par l'au moins un processeur (102), amènent le dispositif réseau (10 ; E2) à déterminer (310) les premières informations (INF-1), dans lequel la détermination (310) des premières informations (INF-1) comprennent au moins un parmi : a) l'évaluation (310a) d'une configuration du dispositif réseau (10) et/ou b) la négociation (310b) avec un dispositif (E3) supplémentaire.

4. Dispositif réseau (10) comprenant l'appareil (100 ; 100') selon l'une des revendications précédentes.

5. Procédé, comprenant les étapes suivantes :
exposer les capacités d'un dispositif réseau liées à au moins une fonction d'économie d'énergie pour laquelle le dispositif peut fournir une planification appropriée en transmettant (300), par le dispositif réseau (10), des premières informations (INF-1) caractérisant au moins une fonction d'économie d'énergie (ESF-1, ...) prise en charge par le dispositif réseau (10) à un dispositif (20) supplémentaire, dans lequel les premières informations (INF-1) caractérisent un ou plusieurs identifiants (ID-1, ID-2, ID-3, ...), chacun des un ou plusieurs identifiants (ID-1, ID-2, ID-3, ...) étant associé à une fonction d'économie d'énergie (ESF-1, ESF-2, ESF-3, ...) spécifique ; et
recevoir (302) du dispositif (20) supplémentaire, par le dispositif réseau (10), des deuxièmes informations (INF-2) caractérisant des directives pour le dispositif réseau (10) concernant une utilisation de l'au moins une fonction d'économie d'énergie (ESF-1), dans lequel les deuxièmes informations (INF-2) caractérisent au moins un identifiant des un ou plusieurs identifiants (ID-1, ID-2, ID-3, ...), dans lequel les deuxièmes informations (INF-2) caractérisent des informations de temporisation (INF-TIM-1, INF-TIM-2, INF-TIM-3, ...) indiquant au moins un parmi a) un point temporel et/ou b) une période de temps pour l'activation de l'au moins une fonction d'économie d'énergie (ESF-1, ...) ; et
activer l'au moins une fonction d'économie d'énergie sur la base des deuxièmes informations.

6. Appareil (200) pour un dispositif de gestion (20), l'appareil (200) comprenant des moyens pour amener le dispositif de gestion (20) à :
recevoir (400) d'un dispositif réseau (10) des capacités exposées comportant des premières informations (INF-1) caractérisant au moins une fonction d'économie d'énergie (ESF-1, ...) prise en charge par le dispositif réseau (10) et pour laquelle le dispositif peut fournir une planification appropriée, dans lequel les premières informations (INF-1) caractérisent un ou plusieurs identifiants (ID-1, ID-2, ID-3, ...), chacun des un ou plusieurs identifiants (ID-1, ID-2, ID-3, ...) étant associé à une fonction d'économie d'énergie (ESF-1, ESF-2, ESF-3, ...) spécifique ;
transmettre (402) au dispositif réseau (10) des deuxièmes informations (INF-2) caractérisant des directives pour le dispositif réseau (10) pour amener le dispositif réseau à activer l'au moins une fonction d'économie d'énergie sur la base des deuxièmes informations, dans lequel les deuxièmes informations (INF-2) caractérisent au moins un identifiant des un ou plusieurs identifiants (ID-1, ID-2, ID-3, ...), dans lequel les deuxièmes informations (INF-2) caractérisent des informations de temporisation (INF-TIM-1, INF-TIM-2, INF-TIM-3, ...) indiquant au moins un parmi a) un point temporel et/ou b) une période de temps pour l'activation de l'au moins une fonction d'économie d'énergie (ESF-1, ...).

7. Appareil (200) selon la revendication 6, dans lequel les deuxièmes informations (INF-2) caractérisent un statut d'activation (STAT-EN-1, STAT-EN-2, STAT-EN-3, ...) indiquant si l'au moins une fonction d'économie d'énergie (ESF-1, ...) doit être activée ou désactivée.

8. Appareil (200) selon l'une des revendications 6 et 7, dans lequel les instructions (206), lorsqu'elles sont exécutées par l'au moins un processeur (202), amènent le dispositif de gestion (20) à déterminer (412) les deuxièmes informations (INF-2) en se basant au moins en partie sur les premières informations (INF-1) à l'aide d'un modèle d'apprentissage machine (MLM).

9. Procédé pour un dispositif de gestion (20), comprenant les étapes suivantes :
recevoir (400) d'un dispositif réseau (10) des capacités exposées comportant des premières informations (INF-1) caractérisant au moins une fonction d'économie d'énergie (ESF-1, ...) prise en charge par le dispositif réseau (10) et pour laquelle le dispositif peut fournir une planification appropriée, dans lequel les premières informations (INF-1) caractérisent un ou plusieurs identifiants (ID-1, ID-2, ID-3, ...), chacun des un ou plusieurs identifiants (ID-1, ID-2, ID-3, ...) étant associé à une fonction d'économie d'énergie (ESF-1, ESF-2, ESF-3, ...) spécifique ;
transmettre (402) au dispositif réseau (10) des deuxièmes informations (INF-2) caractérisant des directives pour le dispositif réseau (10) pour amener le dispositif réseau à activer l'au moins une fonction d'économie d'énergie sur la base des deuxièmes informations, dans lequel les deuxièmes informations (INF-2) caractérisent au moins un identifiant des un ou plusieurs identifiants (ID-1, ID-2, ID-3, ...), dans lequel les deuxièmes informations (INF-2) caractérisent des informations de temporisation (INF-TIM-1, INF-TIM-2, INF-TIM-3, ...) indiquant au moins un parmi a) un point temporel et/ou b) une période de temps pour l'activation de l'au moins une fonction d'économie d'énergie (ESF-1, ...).
